# EUROPEAN PATENT APPLICATION

(11) **EP 1 742 288 A1**
(43) Date of publication of application: **10.01.2007**
(21) Application number: 05076560.1
(22) Date of filing: 08.07.2005
(51) Int. Cl.: H01M 8/16, H01M 4/90

(54) **Microbial fuel cells for oxidation of electron donors**

(71) Applicant: UNIVERSITEIT GENT, 9000 Gent (BE)
(72) Inventor: Rabaey, Korneel, 9185 Wachtebeke (BE); Verstraete, Willy, 9032 Wondelgem (BE)
(74) Representative: Paemen, Liesbet R.J.

(57) **Abstract**

The invention relates to an improved microbial fuel cell for treatment of fluid, especially liquid streams containing a substrate or electron donor for micro-organisms which comprises a membrane (2) separating the cathode (3) and the anode (1), this membrane (2) surrounding the anode (1).

## Description

The present invention relates to an improved microbial fuel cell (MFC) for treatment of fluid especially liquid streams containing a substrate or electron donor for micro-organisms as well as to method of manufacture and operation of such cells. In the technology of microbial fuel cells, micro-organisms transfer electrons gained from their substrate towards an anode, and hence enable the generation of electrical energy.

### Technical Background

In MFC, micro-organisms do not directly transfer their electrons to their characteristic terminal electron acceptor, but these electrons are diverted towards an anode. The electrons are subsequently conducted over a resistance or power user towards a cathode and thus, energy from the micro-organisms is directly converted to electrical energy. To maximize the deposition of electrons on the anode and to close the electrical cycle, a proton exchange membrane is generally installed separating anode and cathode compartment. The basic design of a MFC thus comprises an anode and a cathode, separated by a proton exchange membrane.

In the article of Park, D. H., and J. G. Zeikus, 2003 "Improved fuel cell and electrode designs for producing electricity from microbial degradation", Biotechnology and Bioengineering 81:348-355, the authors describe a microbial fuel cell in which the membrane and cathode were assembled in what is referred to as a MEA, a membrane electrode assembly. This action decreased the amount of energy that was needed to operate the MFC, since aeration was no longer necessary. However, the manufacturing process of the MEA was complicated, and the electrochemical requirements for a successful MFC were not met. Moreover, overall power output remained limited to a maximal value of 788 mW/m², with no indication of the average value.

Simultaneously, Kim *et al.* developed a MFC in which both anode and cathode were present in one, upflow reactor, not separated by a membrane, as described in WO 03/096467 A1. The liquid stream flows through the anode towards an aerated cathode, which is located above the anode. However, this system does not produce significant current, since the internal resistance of the system is too high (in the MΩ range). Also the migration of the organic rest fraction of the liquid waste towards the cathode decreases the attainable efficiency of conversion.

In Liu, H., R. Ramnarayanan, and B. E. Logan. 2004, "Production of electricity during wastewater treatment using a single chamber microbial fuel cell", Environmental Science & Technology 38:2281-2285, the authors disclosed a tubular microbial fuel cell, in which the cathode compartment was enclosed in an inner tube, surrounded by a reactor that contains several graphite rods. This reactor was able to treat a continuous waste stream, but power output was limited to 26 mW/m² and the complexity of the reactor construction too high. The researchers altered the design towards a membraneless reactor in which anode and cathode were on opposite ends. While the omission of the membrane decreases the internal resistance, the distance between the electrode, the oxygen diffusion and the lack of mixing in the reactor caused a low coulombic efficiency.

Several researchers are working towards lamellar systems, in which anode and cathode are tightly junctioned, separated by a membrane. The liquid follows a specific pattern that is drawn in the electrode. This type of reactor can easily be modulated towards a stack system. However, fuel cell stacks have the disadvantage that, when one unit fails, the whole stack needs to be shut down. Moreover, the mode of operation described does not allow for large internal volume, large interphase surface between liquid and electrode, and does allow for significant oxygen intrusion towards the complete anode matrix. Furthermore, the construction of these reactors can be rather complex, and also the construction of the bipolar plate may prove to be a bottleneck. However, the decreased internal resistance does allow for higher power outputs. No data have yet been presented on the operational parameters or output of these systems.

In Schroder, U., J. Niessen, and F. Scholz, 2003, "A generation of microbial fuel cells with current outputs boosted by more than one order of magnitude", Angewandte Chemie - International Edition 42:2880-2883 the authors described anode materials based on conductive polymers, and obtained current densities of up to 1.45 mA/cm². This technology is also described in DE 103 15 792.

As recently disclosed in Rabaey, K., N. Boon, S. D. Siciliano, M. Verhaege, and W. Verstraete, 2004, "Biofuel cells select for microbial consortia that self-mediate electron transfer", Applied and Environmental Microbiology 70:5373-5382, tightly matching anode and cathode did increase the power output of MFCs towards 4.31 W/m², in peak power and batch mode

The major bottlenecks of microbial fuel cells are the transport of electrons from the bacteria to the receiving surface, the anode, and the internal resistance of the system. To amend these bottlenecks, several solutions can be applied, such as supply of sufficient electrode surface, in order to decrease the current density and supply of mediators. In the past, redox mediators have been added to MFCs in order to facilitate the electron shuttling process. However, bacteria can also produce mediators themselves, or transfer electrons through membrane associated shuttles.

The receiving material can be altered chemically/physically to enhance electron transfer and decrease the magnitude of the overpotentials at the anode.

Construction of the reactors towards minimized internal resistance, which includes minimized distance between the electrode, minimized membrane resistance, adequate mixing

Practical design of the MFCs has thus far not focussed on high power output and ease of operation.

### Summary of the Invention

It is an object of the present invention to provide an improved microbial fuel cell (MFC) for treatment of fluid especially liquid streams containing a substrate or electron donor for micro-organisms as well as to provide a method of manufacture and of operation of such cells.

Microbial fuel cells according to the present invention are able to produce electricity directly out of waste. They can achieve high power output in continuous flow mode. The presented invention describes MFCs that offer solutions for both the electron transfer bottlenecks while being a practical design.

A further advantage of the present invention is to provide microbial fuel cells with higher conversion efficiencies and rates than previously described MFCs.

Particular and preferred aspects of the invention are set out in the accompanying independent and dependent claims. Features from the dependent claims may be combined with features of the independent claims and with features of other dependent claims as appropriate and not merely as explicitly set out in the claims.

The present invention covers a microbial fuel cell for use for the treatment of aqueous substrate containing organic matter and/or electron donor, in which electrical current is generated from micro-organisms, comprising at least one reactor, each reactor comprising:
an anode able to accept electrons and to transfer them to an external circuit, and able to sustain micro-organisms;
a cathode able to transfer electrons from the external circuit to an electron acceptor or sink,
a membrane separating the cathode from the anode. The anode is three-dimensional, i.e. has a three dimensional form and is surrounded by the membrane either completely or partially. In some embodiments of the microbial fuel cells of the invention, the membrane does not completely surround the anode. The membrane can be coextensive with the cathode.

Preferably, the (membrane surface)/anode total volume) ratio is at least 1 m²/m³. Most preferably, the specific surface of the anode is > 50 m²/m³.

Several shapes may be adopted: the ensemble formed by the anode and the membrane may be tubular. The membrane may face at least two adjacent or parallel sides of the anode. The anode may comprise several sectors of coarser and finer material. The anode may include internal baffles to direct the flow of liquid through the anode.

When the anode has as a hemispherical form, the membrane may face at least 90° of the projected section of the anode. The reactor may have the global form of a mushroom, or the one of an omega.

In particularly preferred embodiments, the cathode surrounds the membrane.

In an alternative embodiment, the ensemble formed by the anode and the membrane is immerged in an aqueous body. The cathode can be placed at the surface of this aqueous body and optionally in contact with the air.

Preferably, the distance between the anode and the cathode is limited to obtain an internal resistance of maximum 50 Ω (ohms). If the internal resistance of the reactor is 50 Ω (ohms), theoretically, the attainable current output of the reactor will be maximum about 16 mA. This implies a neglectable conversion.

In a preferred embodiment, the anode is macroporous and comprises a conductive material such as graphite. The macroporous conductive anode can be formed from a particulate material such as graphite granules. The anode may consist of a three dimensional structure, with basic characteristics of a resistivity less than 1 Ω per cm (ohm per cm) material.

The cathode may comprise or consist of a graphite structure such as a textile material with carbon fibres such as a woven or knitted graphite structure. It may be moisturised with liquid containing a catalyst or mediator. Alternatively, the cathode may compose or consist of a conductive layer containing the catalyst either within the structure or on the cathode surface.

The reactor configuration may be any suitable shape, e.g. rectangular, oval, ovoid or spherical.

The fuel cells of the invention may be intended for overpressure operation in relation to environment, and further comprise means for supplying gas or gas mixtures to provide overpressure, and/or means for controlling liquid pressure valves to provide overpressure.

The membrane can be chosen from the group consisting of cation specific membranes, a proton exchange membrane, and a physical anode-cathode separator.

The microbial fuel cells of the invention may include an electron donor or electron donors for the anode selected from the group comprising or consisting of glucose, sucrose, acetate and reduced soluble present as for instance in domestic wastewater or biorefinery effluents, or a mixture thereof. The cells may comprise means for operating in upflow mode; or in downflow mode or horizontal flow mode., and optionally may include means for backwashing.

An advantage of the present invention is that it provides a reactor design and/or a mode of operation that enables bacteria to efficiently and rapidly transfer electrons towards an insoluble electron acceptor, externally wired to a higher redox potential acceptor.

The invention can provide a high specific surface of the anode (> 50 m²/m³), enabling intensive contact between either bacteria or electron shuttles, and the anode. The three-dimensional structure of the anode furthermore creates a stable matrix, in which no external addition of soluble mediators is required to obtain significant power output. The membrane or separator, physically separating anode and cathode, surrounds the anode. This can enable high cation exchange rates. The cathode can either be open to the air or contacting a catalyst containing solution.

The invention can provide higher conversion rates and subsequent conversion efficiencies than previously described microbial fuel cells in continuous mode.

The invention provides better technological solutions to apply and practically design microbial fuel cells.

The invention is capable of using a wide variety of substrates as feed, varying from carbohydrates such as glucose, sucrose, acetate to mixed substrates such as domestic wastewater and biorefinery effluents.

The invention is capable of efficiently biodegrading substrates delivered in the incoming fluid.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention.

### Brief Description of the drawings

The reference figures quoted below refer to the attached drawings.
Fig. 1A and Fig. 1B illustrate a view of the tubular microbial fuel cell used for the experiments in accordance with embodiments of the present invention. Fig. 1A: Scheme ; Fig. 1B: Overall set-up.
Fig. 2 illustrates another embodiment of a microbial fuel cell according to the present invention, wherein the reactor has the form of a mushroom.
Fig. 3 illustrates still another embodiment of a microbial fuel cell according to the invention, wherein the reactor is submerged in an aqueous body and has the form of an omega.
Fig. 4. is a graph showing the evolution of the amount of COD removed as electricity in function of the COD loading rate for a glucose fed tubular reactor. The external resistances applied were 50 Ω (ohms) (◆) and 25 Ω (ohms) (■). Upon a further decrease of the external resistance to 10 Ω (ohms), the amount of COD converted to current increased to 0.92 kg COD m⁻³ d⁻¹.
Fig. 5 is a graph showing the evolution of the power output, in W/m³ of anode liquid volume, for an acetate fed microbial fuel cell according to an embodiment of the present invention.
Fig. 6 is a graph showing the evolution of the amount of COD removed as electricity in function of the COD loading rate for an acetate fed tubular reactor. The external resistances applied were 20 Ω (ohms) (◆) and 10 Ω (ohms) (■).

In the different figures, the same reference signs refer to the same or analogous elements.

### Detailed Description of the illustrative embodiments

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

The present invention provides a microbial fuel cell for use for the treatment of organic matter and electron donors, in which electrical current is generated from micro-organisms, comprising at least one reactor, each reactor comprising:
- an anode able to accept electrons and to transfer them to an external circuit, and able to sustain micro-organisms;
- a cathode able to transfer electrons from the external circuit to an electron acceptor or sink,
- a membrane separating the cathode from the anode.
The anode is three-dimensional and is either completely or partially surrounded by the membrane, e.g. at least 40%, 50%, 70% or 90% surrounded. The anode is macroporous, e.g. it can be formed of a particulate material. The cathode and membrane can be coextensive.

The substrate can be an aqueous mixture of water and organic waste and/or electron donor. The invention consists of a reactor design and/or a mode of operation that enables bacteria to efficiently and rapidly transfer electrons towards an insoluble electron acceptor, externally wired to a higher redox potential acceptor. A high specific surface of the anode (> 50 m²/m³), enables intensive contact between either bacteria or electron shuttles, and the anode. The three-dimensional structure of the anode furthermore creates a stable matrix, in which no external addition of soluble mediators is required to obtain significant power output. The three dimensional structure of the anode can take any suitable cross-section or shape. The membrane or separator, physically separating anode and cathode, at least partly surrounds the anode. This can enable high cation exchange rates. The cathode can either be open to the air or contacting a catalyst containing solution. The (membrane surface)/(anode volume) ratio is preferably at least 1 m²/m³.

### Examples

### Example 1

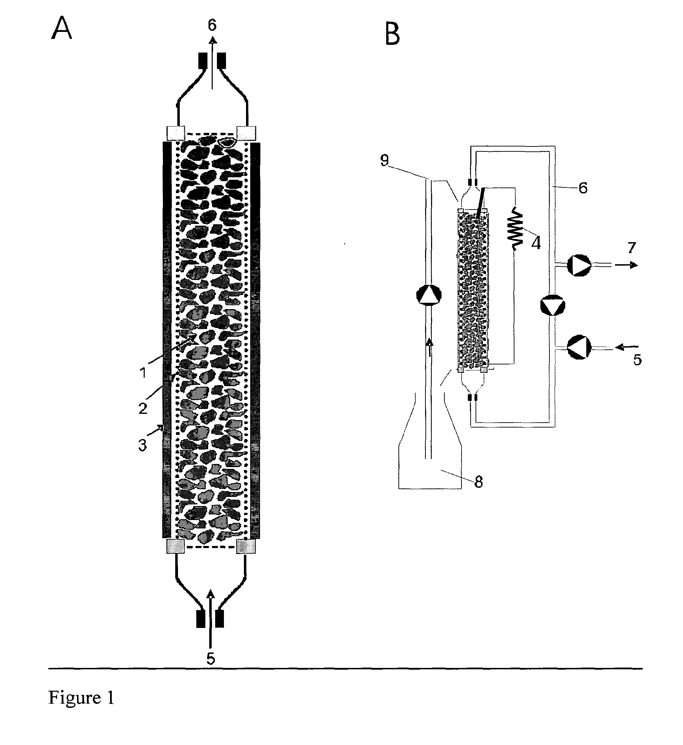

A microbial fuel cell (MFC) as illustrated in Fig. 1A and 1 B was operated on glucose containing influent in duplicate. The inner part of the reactor is filled with a conductive packing, e.g. conductive particles or granules, namely a graphite material such as graphite granules (type 0514, average diameter 4 mm, porosity of 0.53, Le Carbone, Belgium). These graphite granules function as an anodic electrode matrix and constitute the anode 1 of the MFC. The anode has a three-dimensional shape, e.g. tubular or cylindrical or rod-like. The dimensions of the reactor are 200 mm high and 46 mm breadth.

The membrane 2 surrounds the anode 1, and the cathode 3 surrounds the membrane 2. Electrical contact is foreseen over an external load 4. The reactor was inoculated with a bacterial consortium enriched in an MFC, e.g. according to Rabaey, K., N. Boon, S. D. Siciliano, M. Verhaege, and W. Verstraete, 2004, "Biofuel cells select for microbial consortia that self-mediate electron transfer", Applied and Environmental Microbiology 70:5373-5382.

The membrane 2 is a cation exchange membrane dimension of 12.7(1) x 20.0(h) cm (Ultrex ™CMI-5000, Membranes International Inc.). The free liquid volume was 210 ml. 720 ml of feeding liquid or influent was provided daily, with a basic composition of (composition per litre): 6 g Na₂HPO₄; 1 g NH₄Cl; 0.5 g NaCl; 0.2465 g MgSO₄.7H₂O; 3 g KH₂PO₄; 14.7 g CaCl₂. To this basic medium, 1 ml per litre influent of a trace element solution was added (composition per litre trace element solution): FeSO₄.7H₂O 1g; ZnCl₂ 70 mg; MnCl₂.4H₂O 100 mg; H₃BO₃ 6 mg; CaCl₂.6H₂O 130 mg; CuCl₂.2H₂O 2 mg; NiCl₂.6H₂O 24 mg; Na₂Mo₄.2H₂O 36 mg; CoCl₂.6H₂O 238 mg. Glucose was added to this medium to obtain respective loading rates of 0.5, 1.1, 1.6 and 2.7 kg glucose-COD per m³ anode liquid volume per day. The operation was repeated once.

Fig. 1 B illustrates the over-all set up of the MFC. The influent 5 was injected into the anode 1 via the anode loop 6 represented at the right side of Fig. 1B. After passing through the reactor, the liquid was evacuated under the form of an effluent 7. Black arrows represent circulation of the liquid treated through the MFC.

The cathode 3 consisted of a hexacyanoferrate (50 mM) solution sprinkled woven graphite mat with the same dimensions as the membrane 2. This solution used as catholyte 7 entered into the reactor via the cathode loop 8. The catholyte 7 was ejected after use and recycled.

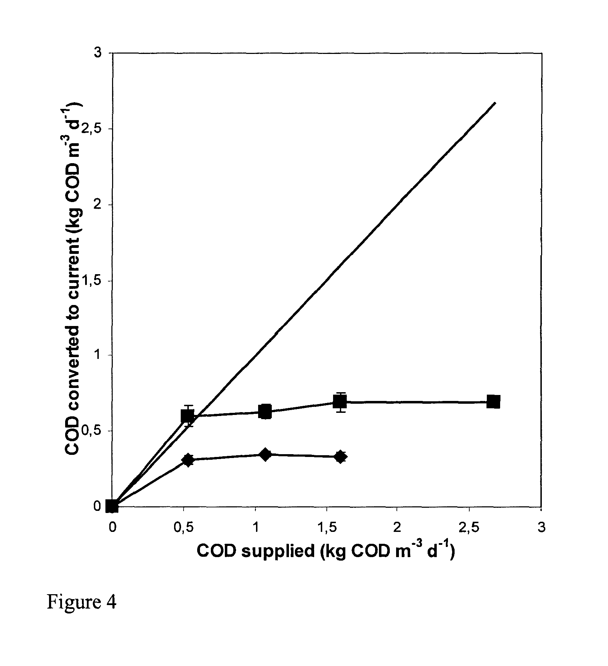

The experiment was carried out with several microbial fuel cells at the same time. Voltage over the MFC was monitored continuously. By applying different external resistances as loads different power outputs could be obtained for similar loading rates, as can be seen on Fig. 4. The reactors generated up to 66 W of average daily power per m³ of anode liquid volume (Table 1). This corresponds to high coulometric, energetic and COD-removal efficiencies.

**Table 1. Results obtained using tubular type reactors fed with glucose, acetate and domestic sewage.**

| Substrate | Av. (Max.) Power (W m⁻³) | Av. (Max.) CE (%) | Av. (Max.) Substrate to Current (kg COD m⁻³ d⁻¹)* | Losses to sulphate (kg COD m⁻³ d⁻¹)* |
|---|---|---|---|---|
| Acetate | 52 ± 10 (90) | 87 ± 9 (98) | 0.79 ± 0.08 (1.12) | 0.002 ± 0.005 |
| Glucose | 49 ± 8 (66) | 43 ± 9 (74) | 0.69 ± 0.06 (0.92) | 0.243 ± 0.009 |
| Wastewater | 8 ± 5 (48) | 22 ± 5 (36) | 0.43 ± 0.10 (0.69) | 0.086 ± 0.024 |

| | | | | |
|---|---|---|---|---|
| CE: Coulombic efficiency; Av.: Average; Max.: Maximum; * Expressed per anode liquid volume | | | | |

Up to 2.26 kg COD was removed per m³ anode liquid volume per day. The lower the loading rate in glucose, the higher the ratio produced current/loading rate (COD converted to current/COD supplies) becomes, yielding conversion efficiencies (coulombic) of up to 90%.

### Example 2

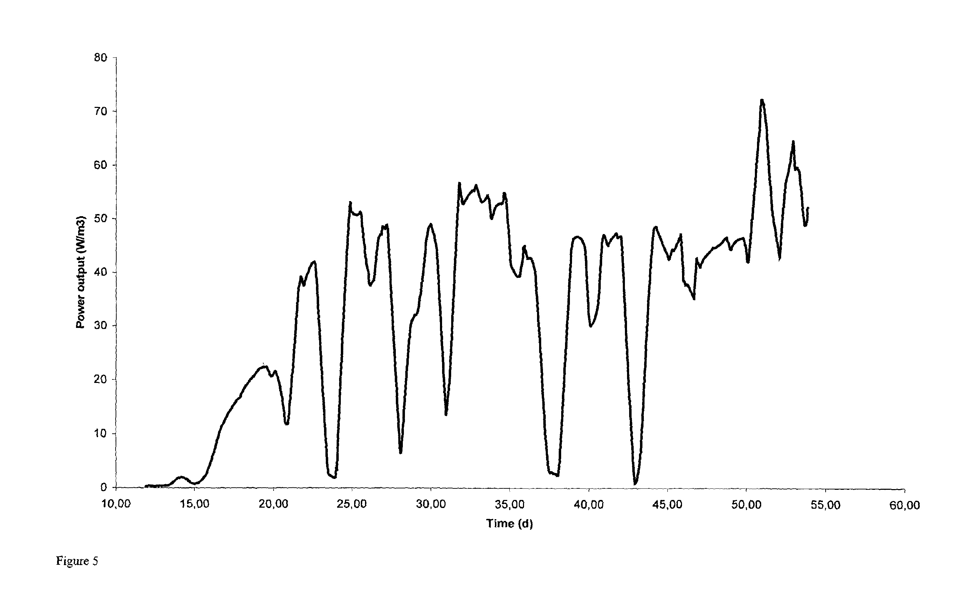

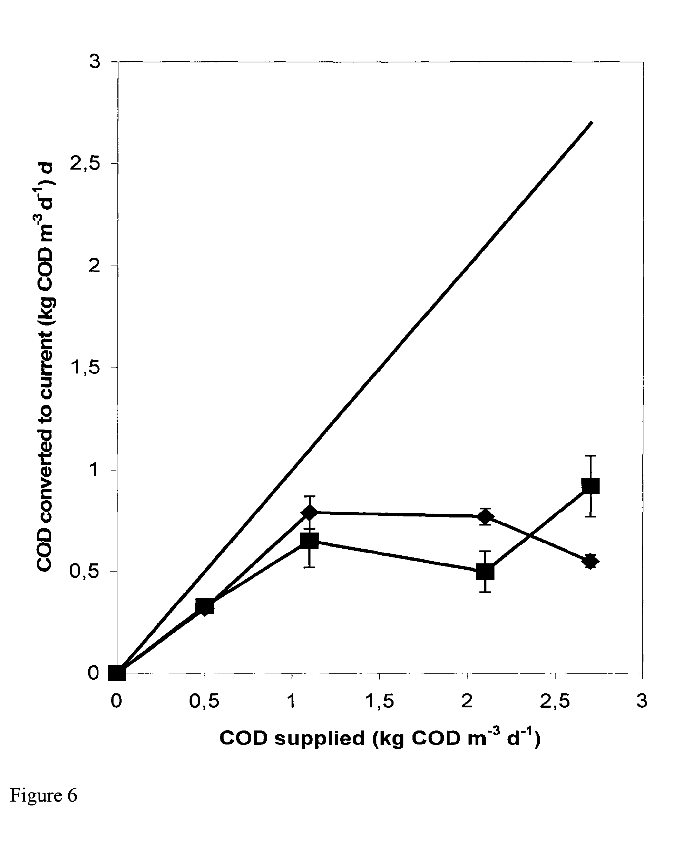

The same type of reactor was operated as for example 1 on acetate containing influent (Fig 5). Same mode of operation as example 1 was performed, with acetate as carbon source, at several loading rates. The power output was, on average, 52 W/m³, with a maximum of 87 W/m³. This corresponded with almost full coulombic conversion of the COD to current. Again, the attained COD removal varied in function of COD loading. (Fig 6)

### Example 3

A tubular reactor similar to that of examples 1 and 2 was operated on domestic wastewater, in a similar manner to that of the set-ups of example 1 and 2, with 0.72 litre of domestic wastewater as feeding per reactor per day. The power output was, on average, 8 W/m³, with a maximum of 48 W/m³ (Table 1). This corresponded with almost full coulombic conversion of the COD that was removed out of the influent to current.

### Example 4

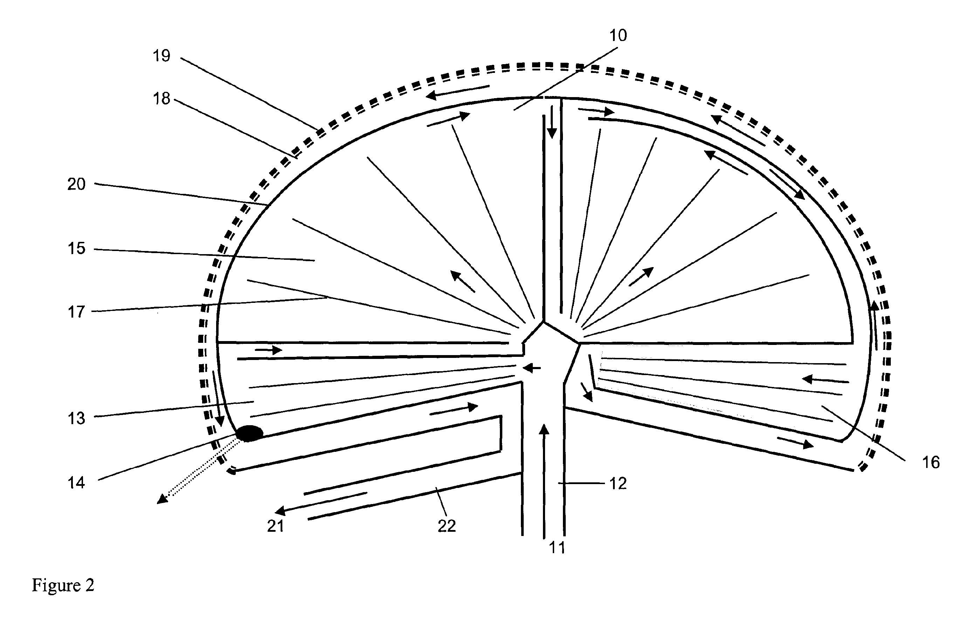

The microbial fuel cell used in this example is an MFC having the global shape of a mushroom, which is illustrated schematically in Fig. 2. Electric contacts over a load can be foreseen to branch anode and cathode (electric circuitry not shown). Influent passes through an anode matrix with different sectors of coarser and finer material, in order to selectively trap particles present in the influent that could impair functioning of the reactor. Conductive separators can be used to separate coarser and finer electrode fractions.

The anode 10 is three-dimensional and has a matrix structure. The influent 11 enters in the MCF via an inlet 12 which forms part of the basis of the structure. The liquid circulates into the reactor according to directions represented schematically by the black arrows. It first enters in a first compartment of the anode filled with coarse conductive packing 13 consisting of graphite. Large non-degradable particles such as sand are captured into a collector 14. The liquid then flows to the two following compartments of the anode, filled with medium conductive packing 15 consisting of graphite. It enters the last compartment of the anode filled with fine conductive packing 16. Baffles 17 distributed in between the compartments guide the liquid movement. Conductive packing can be a particulate conductive material such as graphite granules of various diameters according to influent characteristics and effluent requirements. Also conductive grids, mats or frameworks can be used, or any conductive material allowing flow through of the liquid and growth of the biocatalyst, e.g. a macroporous conductive material.

The liquid leaves the anode 10 through a conduit bounded on the one hand by the membrane 18 surrounded by the cathode 19, and on the other hand by a conductive separator 20 defining the anode 10. Eventually, the liquid leaves the reactor in the form of effluent 21 via the outlet 22.

In this embodiment, the membrane 18 does not completely surround the anode 10 Instead it surrounds the anode to about 60%. The membrane 18 is coextensive with the cathode. Hence the membrane separates the anode from the cathode.

### Example 5

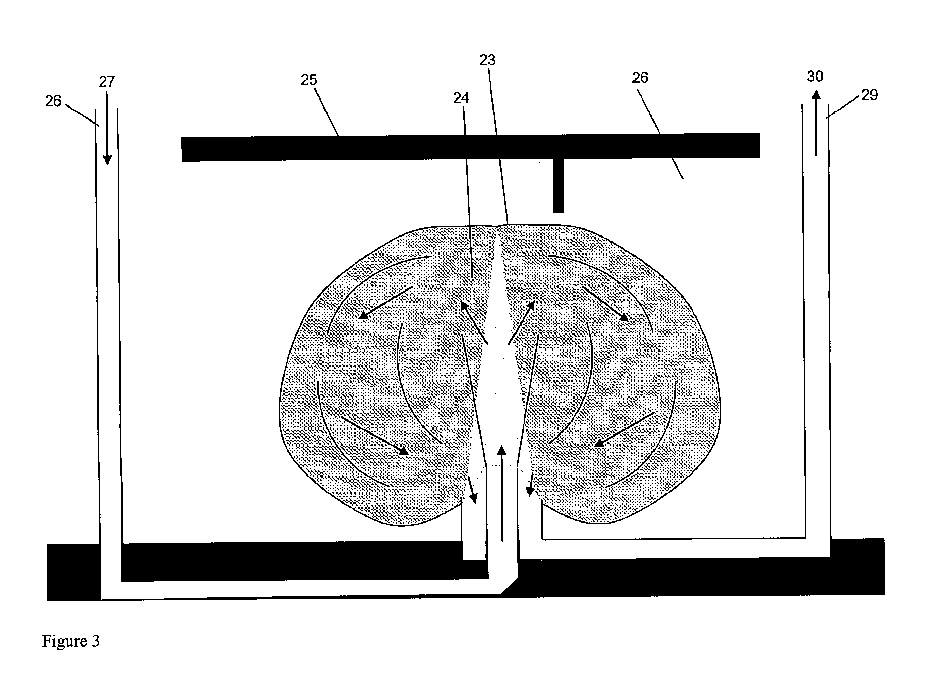

The microbial fuel cell used in this example is an MFC having the global shape of an omega, which is illustrated schematically in Fig. 3. Electrical contacts connected via a load can be foreseen to branch the anode and cathode (electrical circuitry not shown).

As in the previous examples, the membrane 23 surrounds the anode 24. The latter is conceived in a way that it can be constructed supported by environmental hydrostatic water pressure. The membrane separates the anode from the cathode. The cathode 25 can be positioned at the top of a water body 26 and contacts the air. This reduces the structural requirements of the reactor materials. In the anode 24, the reactor can operate according to the reactors described in accordance with any of the examples 1 or 4. The influent 27 enters through the inlet 28, circulates into the reactor and the treated liquid leaves it as en effluent 29 via outlet 30. The flow within the anode may be guided by means of internal baffles so that the liquid is guided throughout the anode. The anode may also be made up of various compartments with different conductive materials in the various compartments, e.g. finer or coarser granules, such as graphite granules.

Other arrangements for accomplishing the objective of the microbial fuel cells embodying the invention will be obvious for those skilled in the art.

It is to be understood that although preferred embodiments, specific constructions and configurations, as well as materials, have been discussed herein for devices according to the present invention, various changes or modifications in form and detail may be made without departing from the scope and spirit of this invention.

## Claims

1. Microbial fuel cell for use for the treatment of aqueous substrate containing organic matter and/or electron donor, in which electrical current is generated from micro-organisms, comprising at least one reactor, each reactor comprising
- an anode (1; 10; 24) able to accept electrons and to transfer them to an external circuit, and able to sustain micro-organisms;
- a cathode (3; 19; 25) able to transfer electrons from the external circuit to an electron acceptor or sink,
- a membrane (2; 18; 23), separating the cathode (3) from the anode (1),
wherein
- the anode is three-dimensional and surrounded at least partly by the membrane (2).

2. Microbial fuel cell according to claim 1, wherein the (membrane surface/anode total volume) ratio is at least 1 m²/m³.

3. Microbial fuel cell according to any of the previous claims, wherein the surface of the anode is > 50 m²/m³.

4. Microbial fuel cell according to any of the previous claims, wherein the ensemble formed by the anode (1) and the membrane (2) is tubular.

5. Microbial fuel cell according to any of the previous claims, wherein the membrane (2) faces at least two adjacent or parallel sides of the anode (1).

6. Microbial fuel cell according to any of the previous claims, wherein the anode (10) comprises several sectors of coarser and finer material.

7. Microbial fuel cell according to any of the claims 1 to 3, wherein the anode has an hemispherical form and in that the membrane (18) faces at least 90° of the projected section of the anode (10).

8. Microbial fuel cell according to any of the previous claims, wherein the reactor has the global form of a mushroom.

9. Microbial fuel cell according to any of the claims 1 to 7, wherein that the reactor has the global form of an omega.

10. Microbial fuel cell according to any of the previous claims, wherein the cathode (3; 19) surrounds the membrane (2; 18).

11. Microbial fuel cell according to any previous claim, wherein the ensemble formed by the anode and the membrane is immersed in a water body (26) and wherein the cathode (25) is placed at the surface of this water body and contacts the air.

12. Microbial fuel cell according to any of the previous claims, wherein the membrane (18, 24) completely surrounds the anode (10; 23).

13. Microbial fuel cell according to any of the previous claims, wherein the distance between the anode and the cathode is limited to obtain an internal resistance of maximum 50 Ω (ohms).

14. Microbial fuel cell according to any of the previous claims, wherein the anode (1; 10; 24) comprises a macroporous particulate material.

15. Microbial fuel cell according to any of the previous claims, wherein the anode (1; 10; 24) consists of a three dimensional structure, with a resistivity of less than 1 Ω per cm (ohm per cm) of material.

16. Microbial fuel cell according to any of the previous claims, wherein the cathode consists of a textile conductive structure moisturized with liquid containing catalyst or mediator.

17. Microbial fuel cell according to any of the claims 1 to 15, wherein the cathode consists of a conductive layer containing the catalyst either within the structure or on the cathode surface.

18. Microbial fuel cell according to any of the previous claims for in flow through operation, wherein the reactor configuration is rectangular, ovoid or spherical.

19. Microbial fuel cell according to any of the previous claims, wherein it is adapted for overpressure operation in relation to the environment, and in that it further comprises means for supplying gas or gas mixtures to provide overpressure,

20. Microbial fuel cell according to any of the previous claims, wherein it is adapted for overpressure operation in relation to the environment, and in that it further comprises means for controlling liquid pressure valves to provide overpressure.

21. Microbial fuel cell according to any of the previous claims, wherein the membrane is chosen from the group consisting of cation specific membranes, a proton exchange membrane, or physical anode-cathode separator.

22. Microbial fuel cell according to any of the previous claims, comprising an electron donor or electron donors for the anode selected from the group comprising glucose, sucrose, acetate and reduced soluble present as for instance in domestic wastewater or biorefinery effluents, or a mixture thereof.

23. Microbial fuel cell according to any of the previous claims, comprising means for operating in upflow mode; or in downflow mode or horizontal flow mode.

24. Microbial fuel cell according to any of the preceding claims comprising means for backwashing,
